(19) Europäisches Patentamt
European Patent Office
Office européen des brevets

(11) **EP 2 145 314 B1**

(12) **EUROPEAN PATENT SPECIFICATION**

(45) Date of publication and mention of the grant of the patent:
**22.07.2015 Bulletin 2015/30**

(21) Application number: **08759436.2**

(22) Date of filing: **06.05.2008**

(51) Int Cl.:
***G06T 7/00*** *(2006.01)*

(86) International application number:
**PCT/EP2008/055577**

(87) International publication number:
**WO 2008/138810 (20.11.2008 Gazette 2008/47)**

(54) **METHOD FOR ANALYSING AN IMAGE OF THE BRAIN OF A SUBJECT, COMPUTER PROGRAM PRODUCT FOR ANALYSING SUCH IMAGE AND APPARATUS FOR IMPLEMENTING THE METHOD**

VERFAHREN ZUR ANALYSE DER ABBILDUNG DES GEHIRNS EINER PERSON, COMPUTERPROGRAMM ZUR ANALYSE EINER SOLCHEN ABBILDUNG UND VORRICHTUNG ZUR DURCHFÜHRUNG DES VERFAHRENS

PROCÉDÉ D'ANALYSE D'IMAGE DU CERVEAU D'UN PATIENT, PRODUIT DE PROGRAMME INFORMATIQUE POUR ANALYSER UNE TELLE IMAGE ET APPAREIL POUR METTRE EN PLACE CE PROCÉDÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **11.05.2007 EP 07290604**

(43) Date of publication of application:
**20.01.2010 Bulletin 2010/03**

(73) Proprietor: **INSERM (Institut National de la Santé et de la Recherche Médicale)**
**75013 Paris (FR)**

(72) Inventors:
• **BENALI, Habib**
**F-75013 Paris (FR)**
• **LEHERICY, Stéphane**
**F-75014 Paris (FR)**
• **KINKINGNÉHUN, Serge**
**F-94400 Vitry-sur-Seine (FR)**
• **MAGNIN, Benoît**
**F-75012 Paris (FR)**
• **DUBOIS, Bruno**
**F-75016 Paris (FR)**

(74) Representative: **Cabinet Plasseraud**
**52, rue de la Victoire**
**75440 Paris Cedex 09 (FR)**

(56) References cited:
**US-A1- 2005 215 889     US-A1- 2006 233 430**

• **KUBOTA ET AL: "A region-of-interest (ROI) template for three-dimensional stereotactic surface projection (3D-SSP) images: Initial application to analysis of Alzheimer disease and mild cognitive impairment" INTERNATIONAL CONGRESS SERIES, EXCERPTA MEDICA, AMSTERDAM, NL, vol. 1290, June 2006 (2006-06), pages 128-134, XP005499264 ISSN: 0531-5131**
• **BENALI ET AL: "BIRD: a brain imaging relational database" NEUROIMAGE, ACADEMIC PRESS, ORLANDO, FL, US, vol. 3, no. 1, June 1996 (1996-06), page S112, XP005346343 ISSN: 1053-8119**
• **MEGA M S ET AL: "Automated brain tissue assessment in the elderly and demented population: Construction and validation of a sub-volume probabilistic brain atlas" NEUROIMAGE, ACADEMIC PRESS, ORLANDO, FL, US, vol. 26, no. 4, 15 July 2005 (2005-07-15), pages 1009-1018, XP004929552 ISSN: 1053-8119**
• **FARROW ET AL: "Fronto-temporal-lobe atrophy in early-stage Alzheimer's disease identified using an improved detection methodology" PSYCHIATRY RESEARCH: NEUROIMAGING, ELSEVIER, vol. 155, no. 1, 14 April 2007 (2007-04-14), pages 11-19, XP022039536 ISSN: 0925-4927**

- **BENOÃ Â TM T MAGNIN ET AL: "Support vector machine-based classification of Alzheimerâ s disease from whole-brain anatomical MRI", NEURORADIOLOGY ; A JOURNAL DEVOTED TO NEUROIMAGING AND INTERVENTIONAL NEURORADIOLOGY OFFICIAL JOURNAL OF THE EUROPEAN SOCIETY OF NEURORADIOLOGY ORGAN OF THE JAPANESE NEURORADIOLOGICAL SOCIETY, SPRINGER, BERLIN, DE, vol. 51, no. 2, 10 October 2008 (2008-10-10), pages 73-83, XP019704262, ISSN: 1432-1920**

- **LILIA MESROB ET AL: "Identification of Atrophy Patterns in Alzheimerâ s Disease Based on SVM Feature Selection and Anatomical Parcellation", 1 August 2008 (2008-08-01), MEDICAL IMAGING AND AUGMENTED REALITY; [LECTURE NOTES IN COMPUTER SCIENCE], SPRINGER BERLIN HEIDELBERG, BERLIN, HEIDELBERG, PAGE(S) 124 - 132, XP019101934, ISBN: 978-3-540-79981-8**

**Description**

The invention relates to a method for analysing an image of the brain of a subject, to a computer program product for analysing such image and to an apparatus for implementing the method.

For brain study, especially in terms of composition, morphology, behaviour or evolution, the brain of a subject may be imaged for example with a three or four dimension image. The image of the brain can then be processed and analysed to identify reliable characteristics, corresponding to measured data of the image, representative of an anatomical or functional feature of the brain.

In a particular application, images of the brain of a plurality of subjects may be distinguished from one another or classified in different groups according to the image data. For example, the method may be used to distinguish images wherein data indicate that the brain suffer from Alzheimer disease from images wherein data indicate that the brain suffer from Mild Cognitive Impairment (MCI) or wherein data indicate that the brain is healthy.

A known approach of processing and analysing the image may consist in a manual or automated parcellation of the brain into regions of interest (ROIs) and in performing volumetry, i.e. measurements of the volume of selected ROIs, the image data being then the volume of the ROIs.

Furthermore, it is also known, from document US-2006/0104494 to implement a method wherein image data for a plurality of subjects are collected, a ROI is selected and intensity and spatial volume data are calculated for the ROI. Said intensity data and volume data are differenced between a subject ROI image and the mean of all subject ROI images.

In document « A region-of-interest (ROI) template for three-dimensional stereostatic surface projection images (3D-SSP): Initial application to analysis of Alzheimer disease and mild cognitive impairment », KUBOTA, USHIJIMA, NISHIMURA, International congress series, Vol.1290, 2006, a ROI template is superimposed on Z-score images of three three-dimensional stereostatic surface projections to obtain Z-scores of ROIs.

In known methods, the analysis of the image is focused on selected ROIs which are known to be concerned with the searched anatomic or functional feature. Measurement of image data, and subsequent distinction or classification, is thus performed on specific ROIs chosen according to the searched anatomic or functional feature of the brain.

Besides, known methods based on comparison between image of the brain of a subject and images of the brains of a population do not provide for an accurate and objective selection of the significant ROI.

Furthermore, known methods are not easily reproducible and even not reliable since said method requires collection of images of the brains in the same conditions, with the same apparatus and using the same settings to make a difference or a comparison possible.

The invention aims to solve the above mentioned deficiency.

To this end, the invention concerns a method according to claim 1.

Hence, the method is performed on the whole brain and provides, next to the parcellation of the image into ROIs, each ROI with an objective and accurate discriminating value. Accuracy of the method is further increased because parcellation is performed in the brain native reference frame.

Distinction or classification of the images based on said method is then more efficient and closer to the real situation of the anatomical or functional feature. The image data of each ROI may be considered and all significant ROIs in relation with a searched feature may then be considered.

Furthermore, since the discriminating value is relative, it does not depend on the settings of the apparatus for collection of the image. Thus the method is reliable and easily reproducible and may be used for analysing images collected from different apparatus or with different settings.

In an embodiment, parcellation may comprise:

- normalization of the image, each voxel being assigned to a ROI of a common template of parcellation into ROIs in a common reference frame,
- application of a non linear transformation to the template of parcellation into ROIs.

The non linear transformation may comprise:

- calculation of an inverted transformation of the normalization,
- application of said inverted transformation to the template of parcellation into ROIs.

The determination of the discriminating value may comprise, for each ROI, the calculation of several relative parameters concerning the image data and the establishment of the discriminating value from a combination of said relative parameters.

In a particular embodiment, the determination of the discriminating value may comprise, for each ROI, identification of groups of voxels according to image data of said voxels, said identification of groups of voxels being performed, for example, using a probability model applied to the voxels.

Calculation of the relative parameter may then be performed for voxels of one of the groups.

The relative parameter may comprise relative weight of one group of voxels with regard to the other groups of voxels.

The relative parameter may comprise statistical parameter concerning the image data of the voxels.

For example, the image data may comprise intensity level.

The method may further comprise determination of at least one significant ROI regarding the relative discriminating values of the ROIs.

Collection of the image, parcellation of said image, determination of the relative discriminating value for each ROI may then be performed for the brain of a plurality of subjects, an evaluation of a discriminating power of the relative discriminating value being performed by a statistical analysis of the relative discriminating value.

Such method may further comprise classification of the images according to the relative discriminating values of the significant ROI.

According to another aspect, the invention concerns a computer program product according to claim 8.

In an embodiment, the instructions operable to cause the processor to parcellate the image may be operable to cause the processor:

- to normalise the image, each voxel being assigned to a ROI of a common template of parcellation into ROIs in a common reference frame,
- to apply a non linear transformation to the template of parcellation into ROIs.

The instructions operable to cause the processor to apply the non linear transformation may be operable to cause the processor:

- to calculate an inverted transformation of the normalization,
- to apply said inverted transformation to the template of parcellation into ROIs.

The instructions operable to cause the processor to determine the discriminating value may be operable to cause the processor, for each ROI, to calculate several relative parameters concerning the image data and to establish the discriminating value from a combination of said relative parameters.

In a particular embodiment, the instructions operable to cause the processor to determine the discriminating value may be operable to cause the processor, for each ROI, to identify groups of voxels according to image data of said voxels, the instructions operable to cause the processor to identify groups of voxels being, for example, operable to cause the processor to apply a probability model to the voxels.

The instructions operable to cause the processor to calculate the relative parameter may then be operable to cause the processor to calculate the relative parameter for voxels of one of the groups.

The computer program product may further comprise instructions operable to cause the processor to determine at least one significant ROI regarding the relative discriminating values of the ROIs.

The instructions operable to cause the processor to parcellate the image and to determine the relative discriminating value for each ROI may make the processor operate said instructions for images of the brain of a plurality of subjects, the computer program product may further comprise instructions operable to cause the processor to evaluate a discriminating power of the relative discriminating value by a statistical analysis of the relative discriminating value.

The computer program product may further comprise instructions operable to cause the processor to classify the images according to the relative discriminating values of the significant ROI.

According to another aspect, the invention concerns an apparatus according to claim 9.

Other objects and advantages of the invention will emerge from the following disclosure.

In order to study the brain of a subject or of several subjects, for example to identify pathology or troubles of the brain, the invention proposes an improved method for analysing images of the brain.

Actually images of the brain may be classified according to image data measured on each image and representative of an anatomical or functional feature of the pathology or the trouble. It is then possible to distinguish images showing said pathology or trouble from the other. In a particular embodiment, the concerned pathology may be the Alzheimer disease and images may be used to identify those having image data representative of the Alzheimer disease, those having image data representative of Mild Cognitive Impairment (MCI) and those having image data representative of healthy brain.

The method according to the invention makes an analysis performed on the whole brain so as to identify in an objective and accurate manner localisations where image data show that said localisations should be taken into account for the study of the brain features and of the evolution of said brain features.

The method for analysing an image of the brain of a subject, comprises the following steps performed successively:

- collection of an image in at least three dimensions of the brain of the subject,
- parcellation of said image into regions of interest (ROIs),
- determination in an automated manner, for each ROI, of at least one discriminating value based on image data measured on the image, said discriminating value being relative with regard to the discriminating values of the other ROIs.

The image of the brain may be collected in any known manner. Images for use in the method may be images in three or four dimensions which make it possible to image the circulations of fluids and the diffusion.

For example, collection of the image may be performed using Magnetic Resonance Imaging (MRI), such as anatomic T1 weighted MRI or T2 weighted MRI. Images may also be collected using a diffusion and perfusion weighted imaging which provides information about blood circulation or a functional MRI wherein Magnetic Resistance signal intensity permits to image the fluctuations in capillary blood flow and blood oxygenation. Besides, PET may be used to collect images on which glucose mechanism, for example, may be imaged. Image could also be collected by diffusion tensor imaging (DTI) which permits to image motion of water and to measure the rate and the directionality of water movement.

Parcellation of the image into ROIs may be performed in an automated manner, using for example a computer provided with a suitable program.

In a first step of the parcellation, a normalization, i.e. a transformation in a common reference frame, of the image may be performed, the image being sampled into voxels, each voxel being assigned to a ROI of a common template of parcellation into ROIs.

An example of suitable template of parcellation into ROIs is that of Tzourio-Mazoyer (« Automated Anatomical Labeling of Activations in SPM Using a Macroscopic Anatomical Parcellation of the MNI MRI Single-Subject Brain », N. TZOURIO-MAZOYER et al., NeuroImage, vol.15, 273-289, January 2002) which defines a mask of, for example, a hundred and sixteen or ninety, ROIs, obtained from the Montreal Neurological Institute (MNI) single subject, in the common MNI reference frame. The mask is applied to the image, using for example a "normalise" function of the program, so that each image may be normalised in the MNI reference frame.

In order to increase accuracy of the method, parcellation is performed in the brain native reference frame characteristic of said brain. To that end, next to the normalization, the parcellation may comprise an application of a non linear transformation wherein:

- an inverted transformation of the normalization is calculated,
- said inverted transformation is applied to the template of parcellation into ROIs, therefore each voxel of the image is assigned to one of the ROI in the brain native reference frame.

During the transformation of the normalization, a deformation field applied to the image is stored in the computer and then inverted by the program. The application of the inverted deformation field to the template of parcellation into ROIs provides for the parcellation into ROIs in the brain native reference frame.

The following disclosure will be made with a method of analysing an anatomic T1 weighted MRI on which the distribution of grey matter in each ROI of the whole brain as anatomical feature of the brain is studied within the context of the detection of Alzheimer disease.

It should be noted, however, that, depending on the application of the analysis of the image, any other anatomical or functional feature could be observed and studied with the corresponding image data using the improved method of the invention.

In the particular embodiment, determination of the discriminating value may be based on intensity level of the voxels, and especially the grey intensity level, as image data.

Then, after the image of the brain has been parcellated into ROIs, the discriminating value for each ROI may be determined by:

- calculating one relative parameter or several relative parameters concerning the intensity level based on intensity level measured for each voxel,
- establishing the discriminating value from the relative parameter or from a combination of said relative parameters.

The discriminating values being determined for each ROI after parcellation into ROIs improves the accuracy of the method since calculation of the relative parameters is performed on the voxels of each ROI rather than the voxels of the whole brain.

In the particular embodiment, the determination of the discriminating value may comprise, for each ROI, identification of groups of voxels according to the intensity level of said voxels.

For example, on the T1 weighted MRI parcelled as above described, histograms of the intensity level of the voxels in each ROI may be plotted. The histograms show three modes corresponding to three tissues of the brain. In order to identify the groups of voxels, a probability model applied to the voxels may be used. An example of suitable probability model applied is an algorithm for separating a mixture of Gaussians:

$$\alpha_1 * N(\mu_1, \sigma_1^2) + \alpha_2 * N(\mu_2, \sigma_2^2) + \alpha_3 * N(\mu_3, \sigma_3^2)$$

Where $\alpha_i$ is the relative weight of voxels belonging to the Gaussian i,

$\mu_i$ is the mean value of the Gaussian i,
$\sigma_i$ is the standard deviation of the Gaussian i,

This permits to identify three Gaussians and to assign each voxel of each ROI a probability to belong to one of the three Gaussians which correspond to three of the tissues of the brain: the grey matter, the white matter and the cerebro-spinal fluid.

Hence, the voxels of each ROI which belong to grey matter, to the white matter or to the cerebro-spinal fluid may be identified.

Furthermore, for each ROI, the algorithm for separating a mixture of Gaussian provides for the following relative parameters:

- statistical parameters such as the mean value and the standard deviation concerning the intensity level of the voxels,
- relative weight of each group of voxels with regard to the other groups of voxels.

However, it should be noted that, depending on the kind of image collected and on the anatomical or functional feature observed, other relative parameters could be considered such as volume of the ROI, circulation in each ROI of oxygen, of blood or of water.

Thus, calculation of the relative parameter and subsequent determination of the discriminating value are made for each ROI considering the intensity level of all the voxels of said ROI so that the discriminating value is representative of the ROI. Said determination can be performed for voxels of one of the groups, especially for voxels of grey matter.

In an example, two discriminating values may, for example, be established:

- the relative weight $\alpha$ of grey matter with regard to white matter and cerebro-spinal fluid and

- the value $\alpha * \dfrac{\sigma}{\mu}$ of the grey matter.

And an evaluation of a discriminating power of said relative discriminating values may then be performed.

To that end, the above disclosed method for analysing an image of the brain of a subject is performed for the brain of a plurality of subjects so that a statistical analysis of the relative discriminating values can be conducted to permit the evaluation of said discriminating power.

For example, a test of Student may be performed. For each region, the distribution of the value $X = \alpha * \dfrac{\sigma}{\mu}$ (or the value $X = \alpha$) may be obtained for first subjects, having a typical anatomical or functional feature, in the present case a typical grey matter distribution, i.e. healthy subjects, and second subjects, having a troubled anatomical or functional feature, in the present case a troubled grey matter distribution, i.e. subjects having Alzheimer disease.

The test T is defined the following way:

$$T = \frac{\overline{X}_{Ctl} - \overline{X}_{MA}}{\sqrt{(S_{Ctl}^2 + S_{MA}^2) * (\dfrac{1}{n_{Ctl}} + \dfrac{1}{n_{MA}})}} * \sqrt{n_{Ctl} + n_{MA} - 2}$$

Where $X_{i,Ctl}$ is the value X for the first subject i,

$\overline{X}_{Ctl}$ is the mean value X for the first subjects,

$X_{i,MA}$ is the value X for the second subject i,

$\overline{X}_{MA}$ is the mean value X for the second subjects,

$$S^2_{Ctl} = \sum_i (X_{i,Ctl} - \overline{X}_{Ctl})^2 \ , \quad S^2_{MA} = \sum_i (X_{i,MA} - \overline{X}_{MA})^2 \ ,$$

$n_{Ctl}$ is the number of first subjects,

$n_{MAI}$ is the number of second subjects.

For each ROI, a threshold for which the discriminating value is significantly different between first and second subjects can be defined.

According to the application, the method may further comprise determination of at least one significant ROI regarding the relative discriminating values of the ROIs and a classification, by means, for example, of an algorithm Support Vector Machine, of the images according to the relative discriminating values of the significant ROI.

The method is performed on the whole brain for each ROI so that each significant ROI may be taken into account without prejudice. Furthermore, since the discriminating value of each ROI is determined on the basis of the image data, in particular the intensity level, of each voxel of said ROI and the discriminating values of each ROI is relative to that of the other ROIs, it is possible to make an accurate and objective classification of the images.

The above described method may be performed in an automated manner using for example an apparatus comprising:

- collection means suitable for collection of an image of the brain of the above mentioned types, in particular T1 weighted MRI,
- a carrier storing a computer program product for analysing an image of the brain of a subject,
- a computer provided with a processor and suitable to read said carrier.

Since the discriminating value of each ROI of the whole brain is relative, collection of the image can be performed on any collection means and with different settings of the collection means.

The computer program product comprises instructions operable to cause the processor:

- to parcellate in an automated manner the image of the brain of a subject into regions of interest (ROIs) in the brain native reference frame characteristic of said brain,

- to determine in an automated manner, for each ROI, at least one discriminating value, in particular $\alpha * \dfrac{\sigma}{\mu}$ or $\alpha$, based on image data, for example intensity level, measured on the image, said intensity level being representative of distribution of grey matter in the brain, each discriminating value being relative with regard to the discriminating values of the other ROIs.

As above indicated, the instructions operable to cause the processor to parcellate the image may be operable to cause the processor:

- to normalise the image, the image being sampled into voxels, each voxel being assigned to a ROI of the common template of parcellation into ROIs of the MNI single subject, in the common MNI reference frame,
- to apply a non linear transformation, and especially:

  - to calculate an inverted transformation of the normalization,
  - to apply said inverted transformation to the template of parcellation into ROIs, each voxel of the image being assigned to one of the ROI in the brain native reference frame.

Besides the instructions operable to cause the processor to determine the discriminating value may be operable to cause the processor:

- to calculate one or several relative parameters concerning the image data based on the grey intensity level measured for each voxel, such as the relative weight of grey matter in each ROI, the mean value and the standard deviation of intensity level of the voxels of each ROI,
- to establish the discriminating value from the relative parameter or from a combination of said relative parameters,
- in case of need, to cause the processor, for each ROI, to identify groups of voxels, in particular those which belong to grey matter, to the white matter or to the cerebro-spinal fluid, according to intensity level of said voxels, for example by applying the algorithm for separating a mixture of Gaussians.

According to the above described embodiment, the instructions operable to cause the processor to calculate the relative parameters may be operable to cause the processor to calculate the relative parameters for voxels of grey matter.

The computer program product may further comprise instructions to determine at least one significant ROI regarding the relative discriminating values of the ROIs.

The instructions operable to cause the processor to parcellate the image and to determine the relative discriminating value for each ROI can then make the processor operate said instructions for images of the brain of a plurality of subjects so that the computer program product further comprising instructions operable to cause the processor to evaluate the discriminating power of the relative discriminating value as above explained.

The computer program product may comprise instructions to cause the processor to classify the images according to the relative discriminating values of the significant ROI.

The above described apparatus using the computer program product improves objectiveness of the selection of the significant ROIs and the accuracy of parcellation and of the discriminating value determination so as to provide for an improved representation of the features of the brain.

**Claims**

1. Method for analysing an image of the brain of a subject, comprising:

   - collection of an image in at least three dimensions of the brain of a subject,
   - parcellation in an automated manner of said image into regions of interest (ROIs) in a brain native reference frame characteristic of said brain, the image being sampled into voxels, each voxel being assigned to one of the ROI in the brain native reference frame,
   - determination in an automated manner, for each ROI, of at least one discriminating value based on image data measured on the image, said image data being representative of an anatomical or functional feature of the brain,
   the method being **characterized in that** the determination of the discriminating value comprises, for each ROI,
   - identification of groups of voxels belonging respectively to three of the tissues of the brain, namely the grey matter, the white matter and the cerebro-spinal fluid, according to image data of said voxels, each voxel being assigned a probability to belong to one of the three tissues, wherein the identification of groups of voxels is performed using a probability model applied to the voxels, the probability model being an algorithm for separating a mixture of Gaussians, which Gaussians correspond respectively to the three tissues:

$$\alpha_1 * \mathrm{N}(\mu_1, \sigma_1^2) + \alpha_2 * \mathrm{N}(\mu_2, \sigma_2^2) + \alpha_3 * \mathrm{N}(\mu_3, \sigma_3^2)$$

   where $\alpha_i$ is the relative weight of voxels belonging to the Gaussian i,
   i.e. of one group of voxels with regard to the other groups of voxels,
   $\mu_i$ is the mean value of the Gaussian i,
   i.e. of one group of voxels,
   $\sigma_i$ is the standard deviation of the Gaussian i,
   i.e. of one group of voxels,
   - calculation of at least one relative parameter concerning the image data based on said image data measured for each voxel, wherein the relative parameter comprises the relative weight $\alpha_i$, the mean value $\mu_i$ the mean value $\mu_i$ and the standard deviation $\sigma_i$, and
   - establishment of the discriminating value from one of the relative parameters or a combination thereof

2. The method according to claim 1, wherein parcellation comprises:

   - normalization of the image, each voxel being assigned to a ROI of a common template of parcellation into ROIs in a common reference frame,
   - application of a non linear transformation to the template of parcellation into ROIs.

3. The method according to claim 2, wherein the non linear transformation comprises:

- calculation of an inverted transformation of the normalization,
- application of said inverted transformation to the template of parcellation into ROIs.

4. The method according to any of claims 1 to 3, wherein the image data comprise intensity level.

5. The method according to any of claims 1 to 4, further comprising determination of at least one significant ROI regarding the discriminating values of the ROIs.

6. The method according to claim 5, wherein collection of the image, parcellation of said image, determination of the discriminating value for each ROI are performed for the brain of a plurality of subjects, an evaluation of a discriminating power of the relative discriminating value being performed by a statistical analysis of the relative discriminating value.

7. The method according to claim 6, further comprising classification of the images according to the discriminating values of the significant ROI.

8. Computer program product for analysing an image of the brain of a subject, said computer program product being stored on a carrier readable by a computer and comprising instructions operable to cause a processor:

   - to parcellate in an automated manner an image in at least three dimensions of the brain of a subject into regions of interest (ROIs) in a brain native reference frame characteristic of said brain, the image being sampled into voxels, each voxel of the image being assigned to one of the ROI in the brain native reference frame,
   - to determine in an automated manner, for each ROI, at least one discriminating value based on image data measured on the image, said image data being representative of an anatomical or functional feature of the brain, the computer program product being **characterized in that** the instructions operable to cause the processor to determine the discriminating value are operable to cause the processor, for each ROI,
   - to identify groups of voxels belonging respectively to three of the tissues of the brain, namely the grey matter, the white matter and the cerebro-spinal fluid, according to image data of said voxels, each voxel being assigned a probability to belong to one of the three tissues, wherein the identification of groups of voxels is performed using a probability model applied to the voxels, the probability model being an algorithm for separating a mixture of Gaussians, which Gaussians correspond respectively to the three tissues:

$$\alpha_1 * \mathrm{N}(\mu_1, \sigma_1^2) + \alpha_2 * \mathrm{N}(\mu_2, \sigma_2^2) + \alpha_3 * \mathrm{N}(\mu_3, \sigma_3^2)$$

   where $\alpha_i$ is the relative weight of voxels belonging to the Gaussian i,
   i.e. of one group of voxels with regard to the other groups of voxels,
   $\mu_i$ is the mean value of the Gaussian i,
   i.e. of one group of voxels,
   $\sigma_i$ is the standard deviation of the Gaussian i,
   i.e. of one group of voxels,
   - to calculate at least one relative parameter concerning the image data based on said image data measured for each voxel, the relative parameter comprising the relative weight $\alpha_i$, the mean value $\mu_i$ and the standard deviation $\sigma_i$, and
   - to establish the discriminating value from one of the relative parameters or a combination thereof.

9. Apparatus for implementing the method according to any of claims 1 to 7, comprising:

   - collection means suitable for collection of an image in at least three dimensions of the brain of a subject,
   - a carrier storing a computer program product according to claim 8,
   - a computer provided with a processor and suitable to read said carrier.

**Patentansprüche**

1. Verfahren zum Analysieren eines Bilds des Gehirns einer Person, wobei das Verfahren umfasst:

   - Erhebung eines Bilds des Gehirns einer Person in mindestens drei Dimensionen,

- Parzellierung des Bilds in interessierende Gebiete (ROIs) in einem natürlichen Bezugssystem des Gehirns, das charakteristisch für das Gehirn ist, auf automatisierte Weise, wobei das Bild in Voxel abgetastet wird, wobei jedes Voxel einem der ROI in dem natürlichen Bezugssystem des Gehirns zugewiesen wird,

- Bestimmung mindestens eines Unterscheidungswerts auf der Grundlage an dem Bild gemessener Bilddaten für jedes ROI auf automatisierte Weise, wobei die Bilddaten ein anatomisches oder funktionales Merkmal des Gehirns repräsentieren,

wobei das Verfahren **dadurch gekennzeichnet ist, dass** die Bestimmung des Unterscheidungswerts für jedes RIO Folgendes umfasst:

- Identifizierung von Gruppen von Voxeln, die jeweils zu drei der Gewebe des Gehirns, d. h. zu der grauen Substanz, zu der weißen Substanz und zu dem Liquor, gehören, gemäß Bilddaten der Voxel, wobei jedem Voxel eine Wahrscheinlichkeit zugewiesen wird, zu einem der drei Gewebe zu gehören, wobei die Identifizierung der Gruppen von Voxeln unter Verwendung eines auf die Voxel angewendeten Wahrscheinlichkeitsmodells ausgeführt wird, wobei das Wahrscheinlichkeitsmodell ein Algorithmus zum Trennen eines Gemischs von Gauß-Verteilungen ist, wobei die Gauß-Verteilungen jeweils den drei Geweben entsprechen:

$$\alpha_1 \cdot N(\mu_1, \sigma_1^2) + \alpha_2 \cdot N(\mu_2, \sigma_2^2) + \alpha_3 \cdot N(\mu_3, \sigma_3^2),$$

wobei $\alpha_i$ die relative Gewichtung der zu der Gauß-Verteilung i gehörenden Voxel, d. h. einer Gruppe von Voxeln hinsichtlich der anderen Gruppen von Voxeln, ist,

$\mu_i$ der Mittelwert der Gauß-Verteilung i, d. h. einer Gruppe von Voxeln, ist,

$\sigma_i$ die Standardabweichung der Gauß-Verteilung i, d. h. einer Gruppe von Voxeln, ist,

- Berechnung mindestens eines relativen Parameters, der die Bilddaten betrifft, auf der Grundlage der für jedes Voxel gemessenen Bilddaten, wobei der relative Parameter die relative Gewichtung $\alpha_i$, den Mittelwert $\mu_i$ und die Standardabweichung $\sigma_i$ umfasst, und

- Festsetzung des Entscheidungswerts aus einem der relativen Parameter oder aus einer Kombination davon.

2. Verfahren nach Anspruch 1, wobei die Parzellierung umfasst:

   - Normierung des Bilds, wobei jedes Voxel einem ROI eines gemeinsamen Musters der Parzellierung in ROIs in einem gemeinsamen Bezugssystem zugewiesen wird,
   - Anwendung einer nichtlinearen Transformation auf das Muster der Parzellierung in ROIs.

3. Verfahren nach Anspruch 2, wobei die nichtlineare Transformation umfasst:

   - Berechnung einer inversen Transformation der Normierung,
   - Anwendung der inversen Transformation auf das Muster der Parzellierung in ROIs.

4. Verfahren nach einem der Ansprüche 1 bis 3, wobei die Bilddaten den Intensitätspegel umfassen.

5. Verfahren nach einem der Ansprüche 1 bis 4, das ferner die Bestimmung mindestens eines signifikanten ROI hinsichtlich der Unterscheidungswerte der ROIs umfasst.

6. Verfahren nach Anspruch 5, wobei die Erhebung des Bilds, die Parzellierung des Bilds, die Bestimmung des Unterscheidungswerts für jedes ROI für das Gehirn mehrerer Personen ausgeführt werden, wobei eine Bewertung einer Unterscheidungsleistung des relativen Unterscheidungswerts durch eine statistische Analyse des relativen Unterscheidungswerts ausgeführt wird.

7. Verfahren nach Anspruch 6, das ferner die Klassifizierung der Bilder gemäß den Unterscheidungswerten des signifikanten ROI umfasst.

8. Computerprogrammprodukt zum Analysieren eines Bilds des Gehirns einer Person, wobei das Computerprogrammprodukt auf einem Träger gespeichert ist, der durch einen Computer lesbar ist, und Anweisungen umfasst, die betreibbar sind, um zu veranlassen, dass ein Prozessor:

   - ein Bild des Gehirns einer Person in mindestens drei Dimensionen auf automatisierte Weise in einem natürlichen Bezugssystem des Gehirns, das charakteristisch für das Gehirn ist, in interessierende Gebiete (ROIs) parzelliert, wobei das Bild in Voxel abgetastet wird, wobei jedes Voxel des Bilds einem der ROI in dem natürlichen Bezugssystem des Gehirns zugewiesen wird,

- auf der Grundlage an dem Bild gemessener Bilddaten für jedes ROI auf automatisierte Weise mindestens einen Unterscheidungswert bestimmt, wobei die Bilddaten ein anatomisches oder funktionales Merkmal des Gehirns repräsentieren,

wobei das Computerprogrammprodukt **dadurch gekennzeichnet ist, dass** die Anweisungen, die dafür betreibbar sind zu veranlassen, dass der Prozessor den Unterscheidungswert bestimmt, dafür betreibbar sind zu veranlassen, dass der Prozessor jedes RIO:

- gemäß Bilddaten der Voxel Gruppen von Voxeln identifiziert, die jeweils zu drei der Gewebe des Gehirns, d. h. zu der grauen Substanz, zu der weißen Substanz und zu dem Liquor, gehören, wobei jedem Voxel eine Wahrscheinlichkeit zugewiesen wird, zu einem der drei Gewebe zu gehören, wobei die Identifizierung der Gruppen von Voxeln unter Verwendung eines auf die Voxel angewendeten Wahrscheinlichkeitsmodells ausgeführt wird, wobei das Wahrscheinlichkeitsmodell ein Algorithmus zum Trennen eines Gemischs von Gauß-Verteilungen ist, wobei die Gauß-Verteilungen jeweils den drei Geweben entsprechen:

$$\alpha_1 \cdot N(\mu_1, \sigma_1^2) + \alpha_2 \cdot N(\mu_2, \sigma_2^2) + \alpha_3 \cdot N(\mu_3, \sigma_3^2),$$

wobei $\alpha_i$ die relative Gewichtung der zu der Gauß-Verteilung i gehörenden Voxel, d. h. einer Gruppe von Voxeln hinsichtlich der anderen Gruppen von Voxeln, ist,

$\mu_i$ der Mittelwert der Gauß-Verteilung i, d. h. einer Gruppe von Voxeln, ist,

$\sigma_i$ die Standardabweichung der Gauß-Verteilung i, d. h. einer Gruppe von Voxeln, ist,

- auf der Grundlage der für jedes Voxel gemessenen Bilddaten mindestens einen relativen Parameter berechnet, der die Bilddaten betrifft, wobei der relative Parameter die relative Gewichtung $\alpha_i$, den Mittelwert $\mu_i$ und die Standardabweichung $\sigma_i$ umfasst, und

- aus einem der relativen Parameter oder aus einer Kombination davon den Entscheidungswert festsetzt.

9. Vorrichtung zur Implementierung des Verfahrens nach einem der Ansprüche 1 bis 7, wobei die Vorrichtung umfasst:

- Erhebungsmittel, die zur Erhebung eines Bilds des Gehirns einer Person in mindestens drei Dimensionen geeignet sind,
- einen Träger, der ein Computerprogrammprodukt nach Anspruch 8 speichert,
- einen Computer, der mit einem Prozessor versehen ist und zum Lesen des Trägers geeignet ist.

**Revendications**

1. Procédé d'analyse d'une image du cerveau d'un sujet, comprenant :

- la collecte d'une image en au moins trois dimensions du cerveau d'un sujet ;
- la parcellisation de manière automatisée de ladite image en régions d'intérêt (ROI), dans un cadre de référence natif du cerveau caractéristique dudit cerveau, l'image étant échantillonnée en voxels, chaque voxel étant attribué à une des ROI dans le cadre de référence natif du cerveau,
- la détermination de manière automatisée, pour chaque ROI, d'au moins une valeur de discrimination sur la base de données d'image mesurées sur l'image, lesdites données d'image étant représentatives d'une caractéristique anatomique ou fonctionnelle du cerveau,

le procédé étant **caractérisé en ce que** la détermination de la valeur de discrimination comprend, pour chaque ROI,

- l'identification de groupes de voxels appartenant respectivement à trois des tissus du cerveau, à savoir la matière grise, la matière blanche et le liquide céphalo-rachidien, selon les données d'image desdits voxels, chaque voxel se voyant attribuer une probabilité d'appartenir à l'un des trois tissus, dans lequel l'identification de groupes de voxels est effectuée en utilisant un modèle de probabilité appliqué aux voxels, le modèle de probabilité étant un algorithme de séparation de mélange de Gaussiennes, lesquelles Gaussiennes correspondent respectivement aux trois tissus :

$$\alpha_1 * \mathrm{N}(\mu_1, \sigma_1^2) + \alpha_2 * \mathrm{N}(\mu_2, \sigma_2^2) + \alpha_3 * \mathrm{N}(\mu_3, \sigma_3^2)$$

où $\alpha_i$ est le poids relatif de voxels appartenant à la Gaussienne i,
à savoir d'un groupe de voxels relativement aux autres groupes de voxels,
$\mu_i$ est la valeur moyenne de la Gaussienne i,
à savoir d'un groupe de voxels,
$\sigma_i$ est l'écart-type de la Gaussienne i, à savoir d'un groupe de voxels,
- le calcul d'au moins un paramètre relatif concernant les données d'image, sur la base desdites données d'image mesurées pour chaque voxel, dans lequel le paramètre relatif comprend le poids relatif $\alpha_i$, la valeur moyenne $\mu_i$, et l'écart-type $\sigma_i$, et
- l'établissement de la valeur de discrimination à partir de l'un des paramètres relatifs ou d'une combinaison de ceux-ci.

2. Procédé selon la revendication 1, dans lequel la parcellisation comprend :

- la normalisation de l'image, chaque voxel étant attribué à une ROI d'une matrice commune de parcellisation dans des ROI d'un cadre de référence commun,
- l'application d'une transformation non-linéaire à la matrice de parcellisation dans des ROI.

3. Procédé selon la revendication 2, dans lequel la transformation non-linéaire comprend :

- le calcul d'une transformation inversée de la normalisation,
- l'application de ladite transformation inversée à la matrice de parcellisation dans des ROI.

4. Procédé selon l'une quelconque des revendications 1 à 3, dans lequel les données d'image comprennent un niveau d'intensité.

5. Procédé selon l'une quelconque des revendications 1 à 4, comprenant en outre la détermination d'au moins une ROI significative concernant les valeurs de discrimination des ROI.

6. Procédé selon la revendication 5, dans lequel la collecte de l'image, la parcellisation de ladite image, la détermination de la valeur de discrimination pour chaque ROI sont effectuées pour le cerveau d'une pluralité de sujets, une évaluation d'une puissance de discrimination de la valeur de discrimination relative étant effectuée par une analyse statistique de la valeur de discrimination relative.

7. Procédé selon la revendication 6, comprenant en outre la classification des images selon les valeurs de discrimination de la ROI significative.

8. Produit programme informatique permettant d'analyser une image du cerveau d'un sujet, ledit produit programme informatique étant stocké sur un support pouvant être lu par un ordinateur et comprenant des instructions utilisables pour amener un processeur :

- à parcelliser de manière automatisée une image en au moins trois dimensions du cerveau d'un sujet en régions d'intérêts (ROI) dans un cadre de référence natif du cerveau caractéristique dudit cerveau, l'image étant échantillonnée en voxels, chaque voxel de l'image étant attribué à l'une des ROI dans le cadre de référence natif du cerveau,
- à déterminer de manière automatisée, pour chaque ROI, au moins une valeur de discrimination sur la base des données d'image mesurées sur l'image, lesdites données d'image étant représentatives d'une caractéristique anatomique ou fonctionnelle du cerveau, le produit programme informatique étant **caractérisé en ce que** les instructions utilisables pour amener le processeur à déterminer la valeur de discrimination peuvent être utilisées pour amener le processeur, pour chaque ROI,
- à identifier des groupes de voxels appartenant respectivement à trois des tissus du cerveau, à savoir la matière grise, la matière blanche et le liquide céphalo-rachidien, selon les données d'image desdits voxels, chaque voxel se voyant attribuer une probabilité d'appartenir à l'un des trois tissus, dans lequel l'identification de groupes de voxels est effectuée en utilisant un modèle de probabilité appliqué aux voxels, le modèle de probabilité étant un algorithme de séparation de mélange de Gaussiennes, lesquelles Gaussiennes correspondent respectivement aux trois tissus :

$$\alpha_1 * \mathrm{N}(\mu_1, \sigma_1^2) + \alpha_2 * \mathrm{N}(\mu_2, \sigma_2^2) + \alpha_3 * \mathrm{N}(\mu_3, \sigma_3^2)$$

où $\alpha_i$ est le poids relatif de voxels appartenant à la Gaussienne i,
à savoir d'un groupe de voxels relativement aux autres groupes de voxels,
$\mu_i$ est la valeur moyenne de la Gaussienne i,
à savoir d'un groupe de voxels,
$\sigma_i$ est l'écart-type de la Gaussienne i, à savoir d'un groupe de voxels,
- à calculer au moins un paramètre relatif concernant les données d'image sur la base desdites données d'image mesurées pour chaque voxel,
le paramètre relatif comprenant le poids relatif, $\alpha_i$, la valeur moyenne, $\mu_i$, et l'écart-type $\sigma_i$, et
- à établir la valeur de discrimination à partir de l'un des paramètres correspondants ou d'une combinaison de ceux-ci.

9. Appareil pour mettre en oeuvre le procédé selon l'une quelconque des revendications 1 à 7, comprenant :

- des moyens de collecte adaptés pour collecter une image en au moins trois dimensions du cerveau d'un sujet,
- un support stockant un produit programme informatique selon la revendication 8,
- un ordinateur doté d'un processeur et adapté pour lire ledit support.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060104494 A

**Non-patent literature cited in the description**

- **KUBOTA ; USHIJIMA ; NISHIMURA.** A region-of-interest (ROI) template for three-dimensional stereostatic surface projection images (3D-SSP): Initial application to analysis of Alzheimer disease and mild cognitive impairment. *International congress series,* 2006, vol. 1290

- **N. TZOURIO-MAZOYER et al.** Automated Anatomical Labeling of Activations in SPM Using a Macroscopic Anatomical Parcellation of the MNI MRI Single-Subject Brain. *NeuroImage,* January 2002, vol. 15, 273-289